# FASCICULE DE BREVET EUROPEEN

(11) **EP 2 033 304 B1**
(45) Date de publication et mention de la délivrance du brevet: **21.12.2016**
(21) Numéro de dépôt: 07765991.0
(22) Date de dépôt: 03.05.2007
(51) Int. Cl.: F02N 11/08, F02N 11/04, H02P 9/10, H02P 9/48

(54) **PROCEDE DE COMMANDE D'UNE MACHINE ELECTRIQUE REVERSIBLE ACCOUPLEE A UN MOTEUR THERMIQUE, GROUPE MOTEUR ADAPTE A LA MISE EN OEUVRE DU PROCEDE ET UTILISATION**
VERFAHREN ZUR STEUERUNG EINER AN EINEN WÄRMEMOTOR GEKOPPELTEN UMWANDELBAREN ELEKTRISCHEN MASCHINE, MOTOR ZUR DURCHFÜHRUNG DIESES VERFAHRENS UND DESSEN VERWENDUNG
METHOD FOR CONTROLLING A REVERSIBLE ELECTRICAL MACHINE COUPLED TO A HEAT ENGINE, ENGINE SUITABLE FOR CARRYING OUT THE METHOD, AND USE THEREOF

(30) Priorité: 28.06.2006 FR 0652687
(43) Date de publication de la demande: 11.03.2009
(73) Titulaire: VALEO EQUIPEMENTS ELECTRIQUES MOTEUR, 94046 Créteil Cedex (FR)
(72) Inventeur: DOFFIN, Hugues, F-92290 Chatenay Malabry (FR); ROUIS, Oussama, F-92300 Levallois Perret (FR); MASFARAUD, Julien, F-75010 Paris (FR)
(86) Numéro de dépôt international: PCT/FR2007/051209
(87) Numéro de publication internationale: WO 2008/000977

(56) Documents cités:
- EP-A1- 1 219 493
- JP-A- 7 075 394
- JP-A- 59 158 331

## Description

### DOMAINE TECHNIQUE DE L'INVENTION

La présente invention concerne un procédé de commande d'une machine électrique réversible accouplée à un moteur thermique, telle qu'un alternateur-démarreur de véhicule, notamment automobile.

L'invention concerne aussi un groupe moteur adapté à la mise en oeuvre de ce procédé, ainsi que l'utilisation du procédé dans les différentes phases de fonctionnement du groupe moteur.

### ARRIERE PLAN TECHNOLOGIQUE DE L'INVENTION

Dans le but d'économiser l'énergie, et de préserver l'environnement, il est prévu de généraliser l'installation de systèmes de démarrage/ arrêt automatique sur les véhicules automobiles.

Le principe de fonctionnement de ces systèmes consiste, sous certaines conditions, à provoquer l'arrêt complet du moteur thermique lorsque le véhicule est lui-même à l'arrêt, puis à redémarrer le moteur thermique à la suite, par exemple, d'une action du conducteur interprétée comme une demande de redémarrage.

A la différence des démarreurs classiques constitués par des moteurs électriques plus ou moins perfectionnés, les machines électriques utilisées dans ces systèmes « Stop and Go » sont généralement réversibles, c'est-à-dire capables de fonctionner soit en démarreur, soit en alternateur. Le remplacement de deux machines distinctes par une seule, concourt à l'optimisation de l'utilisation de l'énergie disponible à bord du véhicule.

De manière connue, l'alternateur-démarreur est soit associé au volant du moteur thermique, en étant intégré à celui-ci, soit entraîné en rotation par le vilebrequin par l'intermédiaire d'une transmission par poulies et courroie, par exemple.

Les caractéristiques de l'alternateur-démarreur, généralement des machines polyphasées, sont optimisées selon le mode de fonctionnement requis en pilotant de manière appropriée les courants d'alimentations des phases.

La demande de brevet EP1219493 A1 décrit un procédé de pilotage d'une machine équipée d'un rotor à aimants permanents.

Un exemple de procédé de commande d'une machine électrique tournante polyphasée réversible pour véhicule automobile à moteur thermique est décrit dans la demande de brevet français FR2854746.

Le procédé de commande décrit dans ce document permet d'obtenir un couple optimal en fonction de la vitesse de rotation de la machine quand celle-ci fonctionne en moteur électrique (mode démarreur ou mode moteur auxiliaire), y compris à grande vitesse.

Toutefois, dans ce procédé, le courant d'excitation est constant et égal à un courant nominal appliqué au démarrage, alors que l'on constate que plus la vitesse augmente, moins un courant d'excitation maximal est propre à maximiser le couple ou le rendement.

Le procédé décrit n'est donc pas totalement adapté à des utilisations nouvelles des alternateurs-démarreurs sur véhicules automobiles, telles que l'assistance dynamique (la machine électrique procure un supplément temporaire de puissance au cours d'un dépassement par exemple), ou l'accompagnement du moteur thermique en phase d'arrêt, pour limiter les vibrations, qui exigent une adéquation précise, à tous les régimes, du couple fourni par la machine électrique au couple du moteur thermique auquel elle est mécaniquement couplée.

### DESCRIPTION GENERALE DE L'INVENTION

La présente invention vise donc à améliorer le pilotage actuel des machines électriques utilisées notamment dans les systèmes de démarrage/arrêt automatique.

Elle concerne plus précisément un procédé de commande d'une machine électrique réversible accouplée à un moteur thermique, cette machine comportant un inducteur alimenté par un courant d'excitation et un induit présentant plusieurs enroulements de phases alimentés par des courants de phases.

Le procédé selon l'invention est remarquable en ce que le courant d'excitation de la machine électrique est piloté en fonction de la vitesse instantanée de rotation de cette machine et du couple du moteur thermique. Dans ce procédé, le courant d'excitation est avantageusement :
- égal à un courant nominal prédéterminé quand le couple du moteur thermique est résistant et la vitesse instantanée est inférieure à une première vitesse de rotation prédéterminée ;
- inférieur au courant nominal quand le couple du moteur thermique est moteur ou la vitesse instantanée est supérieure à la première vitesse.

De préférence, le courant d'excitation est sensiblement égal à un courant optimum correspondant à un rendement optimum de la machine électrique quand le couple du moteur thermique est moteur et la vitesse instantanée est supérieure à une seconde vitesse de rotation prédéterminée.

Le courant d'excitation est aussi préférentiellement égal à un courant intermédiaire compris entre le courant nominal et le courant optimal quand la vitesse instantanée de rotation de la machine électrique est comprise entre la première vitesse et la seconde vitesse.

On tire bénéfice du fait que le courant d'excitation et les courants de phases sont contrôlés de telle façon que le couple de la machine électrique:
- soit maximum et sensiblement constant quand la vitesse instantanée est inférieure à la première vitesse ;
- soit moteur et décroissant quand la vitesse instantanée croit de la première vitesse à la deuxième vitesse ;
- demeure moteur quand la vitesse instantanée croit jusqu'à une troisième vitesse correspondant au régime maximum du moteur thermique.

Selon le procédé de l'invention, le couple du moteur thermique est de préférence déterminé en fonction des paramètres de fonctionnement de ce moteur.

L'invention concerne aussi un groupe moteur adapté à la mise en oeuvre du
procédé précédemment décrit, du type de ceux comprenant :
- un moteur thermique associé à un boîtier électronique d'interface transmettant les paramètres de fonctionnement du moteur ;
- une machine électrique réversible comportant un rotor accouplé au moteur, un inducteur alimenté par un courant d'excitation, un induit présentant plusieurs enroulements de phases alimentés par des courants de phases, et un capteur de la position du rotor ;
- un module électronique de pilotage de la machine comportant une première unité de puissance alimentant les enroulements de phases, une seconde unité de puissance fournissant un courant d'excitation à l'inducteur, une unité logique d'acquisition des signaux émis par le capteur et de pilotage de la première unité.

Le groupe moteur selon l'invention est remarquable en ce que l'unité logique pilote de plus le courant d'excitation en fonction du couple du moteur thermique.

De préférence, cette unité logique comporte des moyens de mémorisation de valeurs représentatives de l'intensité du courant d'excitation en fonction de grandeurs représentatives de la vitesse de rotation du rotor.

Avantageusement, l'unité logique comporte alternativement des moyens de mémorisation de valeurs représentatives de l'intensité dudit courant d'excitation en fonction de grandeurs représentatives de la vitesse de rotation du rotor et du couple du moteur.

Fort avantageusement, l'unité logique comporte de plus des moyens d'acquisition desdits paramètres de fonctionnement du moteur, et alternativement des moyens de mémorisation de valeurs représentatives de l'intensité dudit courant d'excitation en fonction de grandeurs représentatives de la vitesse de rotation dudit rotor et desdits paramètres.

Selon une caractéristique additionnelle du groupe moteur selon l'invention, la seconde unité de puissance comporte un convertisseur élévateur de tension.

Le procédé de commande d'une machine électrique réversible accouplée à un moteur thermique exposé ci-dessus est utilisé avec profit au cours du démarrage, de la montée en régime, du régime permanent ou de l'arrêt du groupe moteur dont les caractéristiques sont données précédemment.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS

La Figure 1 montre la variation typique, connue de l'homme du métier, du couple d'une machine électrique en fonction de la vitesse de rotation pour différentes valeurs constantes du courant d'excitation (courant d'alimentation moyen des phases contant).
La **Figure 2** montre la variation typique, connue de l'homme du métier, du couple d'une machine électrique en fonction de la vitesse de rotation pour différentes valeurs constantes du courant d'excitation (courant moyen d'alimentation des phases variable).
La **Figure 3** montre la variation du courant d'excitation en fonction de la vitesse instantanée de rotation de la machine électrique selon le procédé de l'invention.
La **Figure 4** montre schématiquement l'adaptation du couple moteur d'une machine électrique au couple résistant d'un moteur thermique à la fin de la phase de démarrage.
La **Figure 5** montre la caractéristique couple/ vitesse d'une machine électrique dont le courant d'excitation est piloté selon le procédé de l'invention pour différente valeurs du courant nominal.
La **Figure 6** représente schématiquement un groupe moteur comprenant un moteur thermique et une machine électrique adapté à la mise en oeuvre du procédé selon l'invention.

### DESCRIPTION DES MODES DE REALISATION PREFERES DE L'INVENTION

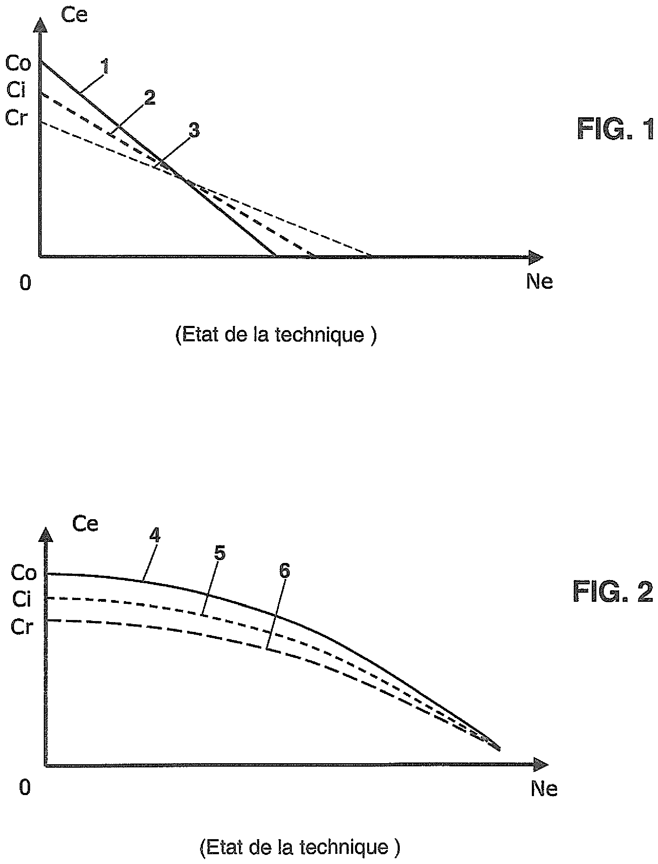

De manière typique, le couple Ce d'une machine électrique, dont le courant moyen d'alimentation des phases et le courant d'excitation sont constants, décroît linéairement en fonction de la vitesse de rotation Ne, comme le montre bien la Figure 1.

La pente des droites 1,2,3 représentatives des caractéristiques couple/vitesse décroît pour des intensités nominales du courant d'excitation décroissantes correspondant à des couples au démarrage Co,Ci,Cr décroissants. Le couple Ce s'annule rapidement pour des vitesses Ne élevées.

Ce type de pilotage à courants d'excitation et de phases constants ne convient donc pas si la machine électrique doit fournir un couple Ce significatif à une vitesse de rotation Ne élevée.

En maintenant le courant d'excitation constant, mais en faisant varier le courant moyen des phases, il est possible de façon connue d'obtenir des caractéristiques couple/vitesse différentes 4,5,6 de celles représentées sur la Figure 1, et d'augmenter la vitesse de rotation Ne pour laquelle le couple Ce de la machine électrique s'annule, comme le représente la Figure 2, pour différentes intensités nominales.

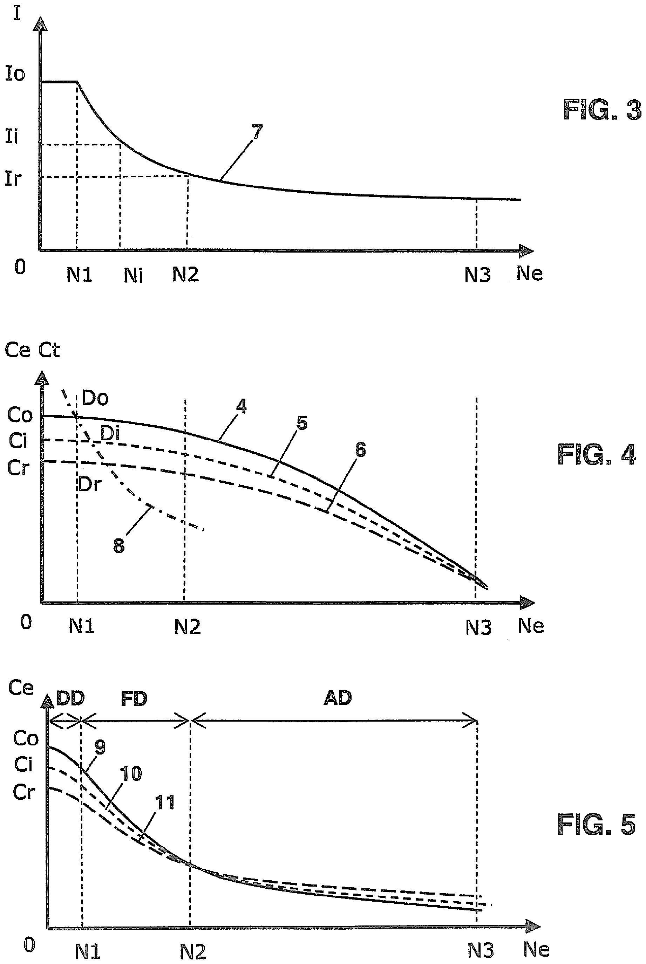

Le procédé selon l'invention consiste à faire varier le courant d'excitation I en fonction de la vitesse Ne selon une courbe 7 représentée sur la Figure 3.

A partir du démarrage jusqu'à une première vitesse de rotation N1, le courant d'excitation I est égal à un courant nominal Io.

Dans un mode le réalisation préféré de l'invention, ce courant nominal est de 25A, maintenu constant jusqu'à une vitesse de 500 tr/mn environ.

Entre cette première vitesse de rotation N1 et une seconde vitesse de rotation N2, le courant d'excitation I décroît à mesure que la vitesse de rotation Ne augmente de telle sorte que le couple Ce de la machine électrique à la fin du démarrage du moteur thermique corresponde au couple mécanique nécessaire pour vaincre le couple résistant Ct du moteur pour chaque vitesse instantanée Ne.

La Figure 4 montre les points de démarrage Do, Di, Dr correspondant aux points d'intersection de la caractéristique couple/vitesse de rotation 8 du moteur thermique (en trait mixte) et des caractéristiques couple/vitesse 4,5,6 de la machine électrique (en traits continu ou interrompus) pour différents courants nominaux d'excitation.

Le couple du moteur Ct à une vitesse instantanée Ne donnée comprise entre N1 et N2 détermine un point de fonctionnement Do, Di, Dr auquel correspond une caractéristique couple/vitesse 4,5,6 particulière de la machine électrique, c'est-à-dire un courant d'excitation I donné.

Grâce au procédé de commande selon l'invention, le moteur thermique est « accompagné » au cours de la montée en régime ; le démarrage est rapide et sans à-coup.

Avec des pilotages classiques de la machine conduisant à des caractéristiques couple/vitesse 1,2,3,4,5,6 telles que celles représentées sur les Figures 1 ou 2, le couple Ce du démarreur devient insuffisant avant la fin du lancement du moteur (Figure 1), ou est supérieur à ce qui est nécessaire (Figure 2).

Dans un mode de réalisation préféré de l'invention, l'accompagnement du moteur thermique est effectué de préférence jusqu'à une deuxième vitesse de rotation N2 de l'ordre de 2000 tr/mn.

Au-delà de cette deuxième vitesse de rotation N2, et jusqu'à une troisième vitesse de rotation N3, de préférence de l'ordre de 6000 tr/mn, correspondant au régime maximum du moteur thermique, le courant d'excitation est sensiblement égal à un courant optimum Ir correspondant au rendement optimum de la machine électrique.

Les caractéristiques couple/vitesse 9,10,11 de la machine électrique résultant du contrôle du courant d'excitation I et des courants des phases selon le procédé de l'invention sont représentées schématiquement sur la Figure 5.

Sur cette figure, on voit que le couple Ce est maximum et sensiblement constant jusqu'à la première vitesse de rotation N1, c'est à dire au début du démarrage (DD) du moteur thermique.

Ensuite, pendant la fin du démarrage (FD), jusqu'à la deuxième vitesse N2 le couple Ce décroît rapidement.

Pour des vitesses instantanées de rotation Ne supérieures à la deuxième vitesse de rotation N2, et jusqu'à la troisième vitesse de rotation N3, le couple Ce moteur de la machine électrique se stabilise à une valeur significative.

De ce fait la machine électrique procure un supplément de puissance à haut régime quand elle est utilisée comme assistance dynamique (AD) sur un véhicule automobile, par exemple en cas de dépassement.

L'adéquation du couple Ce de la machine électrique au couple Ct du moteur thermique grâce à la mise en oeuvre du procédé de commande selon l'invention procure aussi l'avantage de réduire les vibrations dans la phase d'arrêt du moteur.

De la même façon que le moteur est « accompagné » à la fin du démarrage entre les première et deuxième vitesses N1,N2, il l'est entre ces deux vitesses N2,N1 au début de la phase d'arrêt.

Un autre avantage de ce procédé de commande est aussi de procurer une transition en « fondu enchaîné » du mode de fonctionnement en moteur de la machine électrique vers le mode de régime permanent où elle fonctionne en générateur. En effet, dans le mode « alternateur », le flux magnétique dans l'entrefer doit être inférieur à celui existant dans le mode « démarreur ». Le défluxage est obtenu par la réduction du courant d'excitation selon le procédé de l'invention.

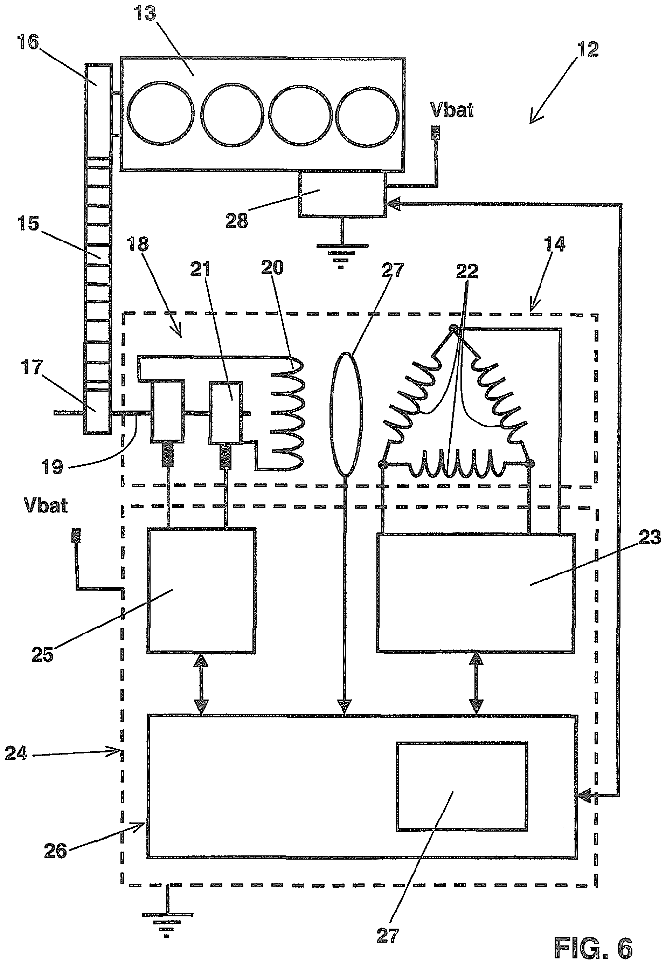

Le procédé selon l'invention est avantageusement mis en oeuvre pour la commande d'une machine électrique d'un groupe moteur 12 tel que celui représenté schématiquement sur la Figure 6.

Ce groupe comprend un moteur thermique 13 accouplé à une machine électrique réversible 14 au moyen d'une transmission par courroie 15 et poulies 16,17.

La machine électrique 14 comporte un rotor 18 solidaire d'une poulie de sortie 17 en bout d'arbre 19. Le rotor 18 présente un inducteur 20 alimenté au moyen d'un collecteur tournant 21.

La machine 14 comprend également des enroulements de phases 22, ou induit, alimentés par une première unité de puissance 23 d'un module électronique de pilotage 24

Une seconde unité de puissance 25 fournit le courant d'excitation I au rotor 18.

Le module électronique de pilotage 24 comprend une unité logique 26 qui pilote les première et seconde unités de puissance 23,25 en fonction des informations fournies par un capteur 27 de la position du rotor 18 et par un boîtier électronique d'interface 28 associé au moteur thermique 13.

Le boîtier électronique d'interface 28 transmet au module électronique de pilotage 24 les paramètres de fonctionnement du moteur 13 qui sont interprétés en terme de couple Ct par l'unité logique 26.

En fonction des grandeurs représentatives du couple Ct du moteur thermique 13 et de grandeurs représentatives de la vitesse instantanée Ne du rotor 18 déduites des informations fournies par le capteur 27, l'unité logique 26 élabore des grandeurs représentatives de l'intensité du courant d'excitation I.

Les grandeurs représentatives de la vitesse sont par exemple des résultats de comptage par un circuit retardateur programmable, associés à des valeurs de fréquence d'horloge, et sont connues en soi de l'homme de métier.

La seconde unité de puissance 25 est de préférence constituée par un circuit hacheur de la tension d'alimentation Vbat de bord générant des impulsions, dont la fréquence et la largeur sont contrôlées par l'unité logique 26.

Dans ce cas, de manière connue en soi, les grandeurs représentatives de l'intensité moyenne I sont des délais, associés à des fréquences d'horloge, chargés dans des circuits retardateurs programmables dédiés.

Pour atteindre les consignes de courant plus rapidement, le circuit hacheur 25 fonctionne aussi avantageusement en convertisseur élévateur de tension.

La fonction liant le courant d'excitation I au couple du moteur thermique 13, et à la vitesse instantanée de rotation Ne de la machine électrique 14, est de préférence tabulée plutôt que calculée dans l'unité logique 26.

Dans ce but, l'unité logique 26 comporte au moins une mémoire non volatile 27 stockant les différentes cartographies utilisées selon les phases de fonctionnement du moteur 13, comme les phases de démarrage, d'assistance dynamique, d'arrêt.

Dans la description ci-dessus, l'inducteur de la machine électrique 14 constitue le rotor, et l'induit, le stator. L'inducteur peut inversement constituer le stator, et l'induit, le rotor, sans que cette variante sorte du cadre de la présente invention.

Comme il va de soi, l'invention ne se limite donc pas aux seuls modes d'exécution préférentiels décrits ci-dessus.

Elle embrasse au contraire toutes les variantes possibles de réalisation.

## Revendications

1. Procédé de commande d'une machine électrique (14) réversible accouplée à un moteur thermique (13), ladite machine (14) comportant un rotor (18) accouplé audit moteur thermique (13) et muni d'un inducteur (20) alimenté par un courant d'excitation (I) et un induit présentant plusieurs enroulements de phases (22) alimentés par des courants de phases, **caractérisé en ce que** le courant d'excitation (I) de ladite machine (14) est piloté en fonction de la vitesse instantanée de rotation (Ne) de ladite machine (14) et du couple (Ct) dudit moteur (13), ledit courant d'excitation (I) étant:
- égal à un courant nominal (Io) prédéterminé quand le couple (Ct) dudit moteur thermique (13) est résistant et ladite vitesse instantanée (Ne) est inférieure à une première vitesse de rotation (N1) prédéterminée;
- inférieur audit courant nominal (Io) quand le couple (Ct) dudit moteur thermique (13) est moteur ou ladite vitesse instantanée (Ne) est supérieure à ladite première vitesse (N1), et
ledit courant d'excitation (I) étant sensiblement égal à un courant optimum (Ir) correspondant à un rendement optimum de ladite machine (14) quand le couple (Ct) dudit moteur thermique (13) est moteur et ladite vitesse instantanée (Ne) est supérieure à une seconde vitesse de rotation (N2) prédéterminée.

2. Procédé de commande d'une machine électrique (14) réversible accouplée à un moteur thermique (13) selon la revendication 1, **caractérisé en ce que** ledit courant d'excitation (I) est égal à un courant intermédiaire (Ii) compris entre ledit courant nominal (Io) et ledit courant optimal (Ir) quand ladite vitesse instantanée (Ne) est comprise entre ladite première vitesse (N1) et ladite seconde vitesse (N2).

3. Procédé de commande d'une machine électrique (14) réversible accouplée à un moteur thermique (13) selon la revendication 2, **caractérisé en ce que** ledit courant d'excitation (I) et lesdits courants de phase sont contrôlés de telle façon que le couple (Ce) de ladite machine (14):
soit maximum et sensiblement constant quand ladite vitesse instantanée (Ne) est inférieure à ladite première vitesse (N1) ;
- soit moteur et décroissant quand ladite vitesse instantanée Ne) croît de ladite première vitesse (N1) à ladite deuxième vitesse (N2);
- demeure moteur quand ladite vitesse instantanée (Ne) croît jusqu'à une troisième vitesse (N3) correspondant au régime maximum dudit moteur (13).

4. Procédé de commande d'une machine électrique (14) réversible accouplée à un moteur thermique (13) selon l'une quelconque des revendications 1 à 3, **caractérisé en ce que** le couple (Ct) dudit moteur (13) est déterminé en fonction des paramètres de fonctionnement dudit moteur (13).

5. Groupe moteur (12) adapté à la mise en oeuvre du procédé selon les revendications 1 à 4 précédentes, du type de ceux comprenant :
- un moteur thermique (13) associé à un boîtier électronique d'interface (28) transmettant les paramètres de fonctionnement dudit moteur (13);
- une machine électrique (14) réversible comportant un rotor (18) accouplé audit moteur (13), un inducteur (20) alimenté par un courant d'excitation (I), un induit présentant plusieurs enroulements de phases (22) alimentés par des courants de phases, et un capteur de la position (27) dudit rotor (18);
- un module électronique (24) de pilotage de ladite machine (14) comportant une première unité de puissance (23) alimentant lesdits enroulements (22), une seconde unité de puissance (25) fournissant un courant d'excitation (I) audit inducteur (20), une unité logique (26) d'acquisition des signaux émis par ledit capteur (27) et de pilotage de ladite première unité (23) ;
**caractérisé en ce que** ladite unité logique (26) pilote de plus ledit courant d'excitation (I) en fonction du couple (Ct) dudit moteur (13) et comporte des moyens de mémorisation (26) de valeurs représentatives de l'intensité (I) dudit courant d'excitation en fonction de grandeurs représentatives de la vitesse de rotation (Ne) dudit rotor (18) et du couple (Ct) dudit moteur (13),
ledit courant d'excitation (I) étant:
- égal à un courant nominal (Io) prédéterminé quand le couple (Ct) dudit moteur thermique (13) est résistant et ladite vitesse instantanée (Ne) est inférieure à une première vitesse de rotation (N1) prédéterminée;
- inférieur audit courant nominal (Io) quand le couple (Ct) dudit moteur thermique (13) est moteur ou ladite vitesse instantanée (Ne) est supérieure à ladite première vitesse (N1), et
ledit courant d'excitation (I) étant sensiblement égal à un courant optimum (Ir) correspondant à un rendement optimum de ladite machine (14) quand le couple (Ct) dudit moteur thermique (13) est moteur et ladite vitesse instantanée (Ne) est supérieure à une seconde vitesse de rotation (N2) prédéterminée.

6. Groupe moteur (12) selon la revendication 5, **caractérisé en ce que** ladite seconde unité de puissance (25) comporte un convertisseur élévateur de tension.

7. Utilisation du procédé selon l'une quelconque des revendications 1 à 4 précédentes au cours du démarrage, de la montée en régime, du régime permanent, ou de l'arrêt du groupe moteur (12) selon l'une quelconque des revendications 5 et 6 précédentes.

## Patentansprüche

1. Verfahren zur Steuerung einer mit einem Wärmekraftmotor (13) gekoppelten reversiblen elektrischen Maschine (14), wobei die Maschine (14) einen Rotor (18), der mit dem Wärmekraftmotor (13) gekoppelt und mit einem mit einem Erregerstrom (I) gespeisten Feldmagnet (20) versehen ist, und einen Anker aufweist, der mehrere Phasenwicklungen (22) hat, die mit Phasenströmen gespeist werden, **dadurch gekennzeichnet, dass** der Erregerstrom (I) der Maschine (14) abhängig von der Augenblicksdrehgeschwindigkeit (Ne) der Maschine (14) und vom Drehmoment (Ct) des Motors (13) gesteuert wird, wobei der Erregerstrom (I):
- gleich einem vorbestimmten Nennstrom (Io) ist, wenn das Drehmoment (Ct) des Wärmekraftmotors (13) ein Widerstandsmoment und die Augenblicksgeschwindigkeit (Ne) niedriger als eine erste vorbestimmte Drehgeschwindigkeit (N1) ist;
- niedriger als der Nennstrom (Io) ist, wenn das Drehmoment (Ct) des Wärmekraftmotors (13) ein Antriebsmoment oder die Augenblicksgeschwindigkeit (Ne) höher als die erste Geschwindigkeit (N1) ist, und
der Erregerstrom (I) im Wesentlichen gleich einem optimalen Strom (Ir) ist, der einem optimalen Wirkungsgrad der Maschine (14) entspricht, wenn das Drehmoment (Ct) des Wärmekraftmotors (13) ein Antriebsdrehmoment und die Augenblicksgeschwindigkeit (Ne) höher als eine zweite vorbestimmte Drehgeschwindigkeit (N2) ist.

2. Steuerverfahren einer mit einem Wärmekraftmotor (13) gekoppelten reversiblen elektrischen Maschine (14) nach Anspruch 1, **dadurch gekennzeichnet, dass** der Erregerstrom (I) gleich einem Zwischenstrom (Ii) ist, der zwischen dem Nennstrom (Io) und dem optimalen Strom (Ir) liegt, wenn die Augenblicksgeschwindigkeit (Ne) zwischen der ersten Geschwindigkeit (N1) und der zweiten Geschwindigkeit (N2) liegt.

3. Steuerverfahren einer mit einem Wärmekraftmotor (13) gekoppelten reversiblen elektrischen Maschine (14) nach Anspruch 2, **dadurch gekennzeichnet, dass** der Erregerstrom (I) und die Phasenströme so gesteuert werden, dass das Drehmoment (Ce) der Maschine (14):
- maximal und im Wesentlichen konstant ist, wenn die Augenblicksgeschwindigkeit (Ne) niedriger ist als die erste Geschwindigkeit (N1);
- ein Antriebsdrehmoment und abnehmend ist, wenn die Augenblicksgeschwindigkeit (Ne) von der ersten Geschwindigkeit (N1) zur zweiten Geschwindigkeit (N2) zunimmt;
- ein Antriebsdrehmoment bleibt, wenn die Augenblicksgeschwindigkeit (Ne) bis zu einer dritten Geschwindigkeit (N3) zunimmt, die der maximalen Drehzahl des Motors (13) entspricht.

4. Steuerverfahren einer mit einem Wärmekraftmotor (13) gekoppelten reversiblen elektrischen Maschine (14) nach einem der Ansprüche 1 bis 3, **dadurch gekennzeichnet, dass** das Drehmoment (Ct) des Motors (13) abhängig von den Betriebsparametern des Motors (13) bestimmt wird.

5. Motorblock (12), der zur Durchführung des Verfahrens nach den vorhergehenden Ansprüchen 1 bis 4 geeignet ist, von der Art derjenigen, die enthalten:
- einen Wärmekraftmotor (13), der einem elektronischen Schnittstellengehäuse (28) zugeordnet ist, das die Betriebsparameter des Motors (13) überträgt;
- eine reversible elektrische Maschine (14), die einen mit dem Motor (13) gekoppelten Rotor (18), einen von einem Erregerstrom (I) gespeisten Feldmagnet (20), einen Anker, der mehrere Phasenwicklungen (22) aufweist, die von Phasenströmen gespeist werden, und einen Sensor der Stellung (27) des Rotors (18) aufweist;
- ein elektronisches Modul (24) zur Steuerung der Maschine (14), das eine erste Leistungseinheit (23), die die Wicklungen (22) speist, eine zweite Leistungseinheit (25), die einen Erregerstrom (I) an den Feldmagnet (20) liefert, eine Logikeinheit (26) zur Erfassung der vom Sensor (27) gesendeten Signale und zur Steuerung der ersten Einheit (23) aufweist;
**dadurch gekennzeichnet, dass** die Logikeinheit (26) außerdem den Erregerstrom (I) abhängig vom Drehmoment (Ct) des Motors (13) steuert und
Speichereinrichtungen (26) von Werten aufweist, die für die Stärke (I) des Erregerstroms abhängig von repräsentativen Größen der Drehgeschwindigkeit (Ne) des Rotors (18) und des Drehmoments (Ct) des Motors (13) repräsentativ sind, wobei der Erregerstrom (I):
- gleich einem vorbestimmten Nennstrom (Io) ist, wenn das Drehmoment (Ct) des Wärmekraftmotors (13) ein Widerstandsmoment und die Augenblicksgeschwindigkeit (Ne) niedriger als eine erste vorbestimmte Drehgeschwindigkeit (N1) ist;
- niedriger als der Nennstrom (Io) ist, wenn das Drehmoment (Ct) des Wärmekraftmotors (13) ein Antriebsdrehmoment oder die Augenblicksgeschwindigkeit (Ne) höher als die erste Geschwindigkeit (N1) ist, und
wobei der Erregerstrom (I) im Wesentlichen gleich einem optimalen Strom (Ir) ist, der einem optimalen Wirkungsgrad der Maschine (14) entspricht, wenn das Drehmoment (Ct) des Wärmekraftmotors (13) ein Antriebsdrehmoment und die Augenblicksgeschwindigkeit (Ne) höher als eine zweite vorbestimmte Drehgeschwindigkeit (N2) ist.

6. Motorblock (12) nach Anspruch 5, **dadurch gekennzeichnet, dass** die zweite Leistungseinheit (25) einen Spannungserhöhungswandler aufweist.

7. Verwendung des Verfahrens nach einem der vorhergehenden Ansprüche 1 bis 4 während des Anlassens, der Drehzahlanhebung, dem Dauerbetrieb oder dem Abschalten des Motorblocks (12) nach einem der vorhergehenden Ansprüche 5 und 6.

## Claims

1. Method for controlling a reversible electrical machine (14) coupled to a heat engine (13), said machine (14) comprising a rotor (18) coupled to said heat engine (13) and provided with a field coil (20) powered by an excitation current (I) and an armature having several phase windings (22) powered by phase currents, **characterized in that** the excitation current (I) of said machine (14) is driven according to the instantaneous rotation speed (Ne) of said machine (14) and the torque (Ct) of said engine (13), said excitation current (I) being:
- equal to a predetermined nominal current (Io) when the torque (Ct) of said heat engine (13) is resisting and said instantaneous speed (Ne) is lower than a first predetermined rotation speed (N1);
- lower than said nominal current (Io) when the torque (Ct) of said heat engine (13) is motive or said instantaneous speed (Ne) is higher than said first speed (N1), and
said excitation current (I) being substantially equal to an optimum current (Ir) corresponding to an optimum efficiency of said machine (14) when the torque (Ct) of said heat engine (13) is motive and said instantaneous speed (Ne) is higher than a second predetermined rotation speed (N2).

2. Method for controlling a reversible electrical machine (14) coupled to a heat engine (13) according to Claim 1, **characterized in that** said excitation current (I) is equal to an intermediate current (Ii) lying between said nominal current (Io) and said optimum current (Ir) when said instantaneous speed (Ne) lies between said first speed (N1) and said second speed (N2).

3. Method for controlling a reversible electrical machine (14) coupled to a heat engine (13) according to Claim 2, **characterized in that** said excitation current (I) and said phase currents are controlled such that the torque (Ce) of said machine (14):
is maximum and substantially constant when said instantaneous speed (Ne) is lower than said first speed (N1);
- is motive and decreasing when said instantaneous speed (Ne) increases from said first speed (N1) to said second speed (N2);
- remains motive when said instantaneous speed (Ne) increases to a third speed (N3) corresponding to the maximum speed of said engine (13).

4. Method for controlling a reversible electrical machine (14) coupled to a heat engine (13) according to any one of Claims 1 to 3, **characterized in that** the torque (Ct) of said engine (13) is determined as a function of the operating parameters of said engine (13).

5. Machine unit (12) suitable for implementing the method according to the preceding Claims 1 to 4, of the type of those comprising:
- a heat engine (13) associated with an electronic interface unit (28) transmitting the operating parameters of said engine (13);
- a reversible electrical machine (14) comprising a rotor (18) coupled to said engine (13), a field coil (20) powered by an excitation current (I), an armature having several phase windings (22) powered by phase currents, and a sensor of the position (27) of said rotor (18);
- an electronic module (24) for driving said machine (14) comprising a first power unit (23) powering said windings (22), a second power unit (25) supplying an excitation current (I) to said field coil (20), a logic unit (26) for acquiring the signals emitted by said sensor (27) and driving said first unit (23) ;
**characterized in that** said logic unit (26) also drives said excitation current (I) as a function of the torque (Ct) of said engine (13) and comprises storage means (26) for storing values representative of the intensity (I) of said excitation current as a function of quantities representative of the rotation speed (Ne) of said rotor (18) and of the torque (Ct) of said engine (13), said excitation current (I) being:
- equal to a predetermined nominal current (Io) when the torque (Ct) of said heat engine (13) is resisting and said instantaneous speed (Ne) is lower than a first predetermined rotation speed (N1);
- lower than said nominal current (Io) when the torque (Ct) of said heat engine (13) is motive or said instantaneous speed (Ne) is higher than said first speed (N1); and
said excitation current (I) being substantially equal to an optimum current (Ir) corresponding to an optimum efficiency of said machine (14) when the torque (Ct) of said heat engine (13) is motive and said instantaneous speed (Ne) is higher than a second predetermined rotation speed (N2).

6. Machine unit (12) according to Claim 5, **characterized in that** said second power unit (25) comprises a voltage step-up converter.

7. Use of the method according to any one of the preceding Claims 1 to 4 during the start up, ramp-up time, steady state regime, or stopping of the machine unit (12) according to either one of the preceding Claims 5 and 6.
